# EUROPÄISCHE PATENTSCHRIFT

(11) **EP 2 377 218 B1**
(45) Veröffentlichungstag und Bekanntmachung des Hinweises auf die Patenterteilung: **24.12.2014**
(21) Anmeldenummer: 10701449.0
(22) Anmeldetag: 07.01.2010
(51) Int. Cl.: H02H 3/04, H02H 9/04

(54) **ÜBERSPANNUNGSSCHUTZELEMENT**
OVERVOLTAGE PROTECTOR
ÉLÉMENT DE PROTECTION CONTRE LES SURTENSIONS

(30) Priorität: 12.01.2009 DE 102009004673
(43) Veröffentlichungstag der Anmeldung: 19.10.2011
(60) Teilanmeldung: 13004115.5
(73) Patentinhaber: Phoenix Contact GmbH & Co. KG, 32825 Blomberg (DE)
(72) Erfinder: BRAND, Friedrich-Eckhard, 32683 Barntrup (DE); PFÖRTNER, Steffen, 31832 Springe (DE); PÖTZSCH, Bernd, 32756 Detmold (DE)
(74) Vertreter: Gesthuysen Patent- und Rechtsanwälte
(86) Internationale Anmeldenummer: PCT/EP2010/000041
(87) Internationale Veröffentlichungsnummer: WO 2010/079132

(56) Entgegenhaltungen:
- EP-A2- 1 022 837
- EP-A2- 1 562 272
- US-A1- 2008 094 766
- US-B1- 6 600 425

## Beschreibung

Die Erfindung betrifft ein Überspannungsschutzelement mit einem Gehäuse und mit mindestens einem in dem Gehäuse angeordneten überspannungsbegrenzenden Bauelement, insbesondere einem gasgefüllten Überspannungsableiter, einer Funkenstrecke, einer Suppressor-Diode oder einem Varistor, wobei dem überspannungsbegrenzenden Bauelement ein Überwachungsbauelement zugeordnet ist, und wobei eine das Signal des Überwachungsbauelements auswertende Auswerteeinheit vorgesehen ist, die galvanisch von dem Ableitstrompfad, über den der von dem Überwachungsbauelement erfasste Strom fließt, getrennt ist.

Der Überspannungsschutz kann in unterschiedliche Einsatzgebiete aufgeteilt werden. Dabei unterscheidet man insbesondere zwischen Überspannungsschutz für die Stromversorgung, für die Mess-, Steuer- und Regeltechnik (MSR-Technik) und für die Informationstechnik und Telekommunikation. Schnittstellen der MSR-Technik sind gegen Überspannungen weitaus empfindlicher als Stromversorgungssysteme. Für den Überspannungsschutz werden daher im MSR-Bereich zumeist Überspannungsschutzelemente mit kombinierten Schutzschaltungen verwendet, wobei mindestens ein überspannungsbegrenzendes Bauelement dem Grobschutz und mindestens ein überspannungsbegrenzendes Bauelement dem Feinschutz dient. Häufig wird dabei eine indirekte Parallelschaltung eines gasgefülltem Überspannungsableiter und einer Suppressor-Diode verwendet, wobei zwischen dem gasgefüllten Überspannungsableiter und der Suppressor-Diode ein Entkopplungswiderstand angeordnet ist.

Die bekannten Überspannungsschutzelemente sind häufig als "Schutzstecker" ausgebildet, die zusammen mit einem Geräteunterteil ein Überspannungsschutzgerät bilden. Zur Installation eines derartigen Überspannungsschutzgeräts sind am Geräteunterteil entsprechende Anschlussklemmen für die einzelnen Leiter vorgesehen. Zur einfachen mechanischen und elektrischen Kontaktierung des Geräteunterteils mit dem jeweiligen Überspannungsschutzelement sind bei dem Überspannungsschutzelement die Anschlusselemente als Steckerstifte ausgebildet, zu denen im Geräteunterteil korrespondierende, mit den Anschlussklemmen verbundene Steckerbuchsen angeordnet sind, so dass das Überspannungsschutzelement einfach auf das Geräteunterteil aufsteckbar ist.

Bei derartigen Überspannungsschutzgeräten ist die Installation und Montage durch die Steckbarkeit des Überspannungsschutzelements sehr einfach und zeitsparend durchführbar. Zusätzlich weisen derartige Überspannungsschutzgeräte teilweise noch eine Fernmeldung, als Signalgeber des Zustands des Überspannungsschutzelements, die üblicherweise als Wechselkontakt ausgeführt ist, sowie eine optische Zustandsanzeige im Überspannungsschutzelement auf. Über die Zustandsanzeige wird angezeigt, ob das in dem Überspannungsschutzelement angeordnete überspannungsbegrenzende Bauelement noch funktionstüchtig ist oder nicht. Als überspannungsbegrenzendes Bauelement werden je nach Einsatzzweck des Überspannungsschutzelements Varistoren, gasgefüllten Überspannungsableiter, Funkenstrecken oder Dioden, insbesondere Suppressor-Dioden eingesetzt.

Aufgrund von Alterung, Vorschädigung durch Ableitvorgänge und zeitweise auftretenden Überspannungen (TOV) im Sekundenbereich kommt es insbesondere bei Überspannungsschutzelementen mit einem Varistor als überspannungsbegrenzendes Bauelement zu einer unerwünschten Erhöhung des Leckstromes des Varistors bei Betriebsspannungen. Überspannungsschutzelemente mit einem Varistor als Ableiter weisen daher heutzutage häufig eine thermische Abtrennvorrichtung auf, durch die ein nicht mehr einwandfrei funktionsfähiger Varistor elektrisch von dem zu überwachenden Strompfad abgetrennt wird. Darüber hinaus werden thermische Abtrennvorrichtungen auch bei Überspannungsschutzelementen mit Funkenstrecken als Ableiter verwendet.

Eine derartiges Überspannungsschutzelement ist beispielsweise aus der DE 20 2004 006 227 U1 bekannt. Bei dem bekannten Überspannungsschutzelement erfolgt die Überwachung des Zustands eines überspannungsbegrenzenden Bauelements, insbesondere eines Varistors, nach dem Prinzip eines Temperaturschalters, so dass bei Überhitzung des Varistors eine zwischen dem Varistor und einem Trennelement vorgesehene Lötverbindung aufgetrennt wird, was zu einem elektrischen Abtrennen des Varistors führt. Außerdem wird beim Auftrennen der Lötverbindung ein Kunststoffelement durch die Rückstellkraft einer Feder aus einer ersten Position in eine zweite Position geschoben, in der das als federnde Metallzunge ausgebildete Trennelement durch das Kunststoffelement thermisch und elektrisch vom Varistor getrennt ist. Da das Kunststoffelement zwei nebeneinander angeordnete farbige Markierungen aufweist, fungiert es zusätzlich auch als optische Zustandsanzeige, wodurch der Zustand des Überspannungsschutzelements direkt vor Ort einfach abgelesen werden kann. Durch eine derartige integrierte Anzeige kann jedoch nur ein Defekt des Überspannungsschutzelements signalisiert werden.

Da Überspannungsschutzgeräte hohen Stossstrombelastungen ausgesetzt sind, können die einzelnen überspannungsbegrenzenden Bauelemente in Abhängigkeit von der Höhe und Häufigkeit der Beanspruchungen Schaden nehmen, so dass die Funktionstüchtigkeit der Überspannungselemente regelmäßig kontrolliert werden sollte. Zur Kontrolle der Funktionstüchtigkeit steckbarer Überspannungsschutzelemente wird von der Anmelderin ein tragbares Ableiterprüfgerät unter dem Namen "CHECKMASTER" vertrieben (Katalog TRABTECH 2007, Seite 166 bis 173), das eine Prüfaufnahme aufweist, in die der jeweils zu prüfende Schutzstecker eingesteckt werden kann. Dabei werden die aktuellen elektrischen Parameter der überspannungsbegrenzenden Bauelemente ermittelt und mit Referenzwerten verglichen, wobei durch eine Toleranzwertmessung stark belastete Bauelemente als vorgeschädigt identifiziert werden. Das Ableiterprüfgerät ermöglicht somit - zusätzlich zur Anzeige einest defekten Überspannungsschutzelements - auch eine Vorsorgeuntersuchung eines Überspannungsschutzelements. Nachteilig ist jedoch, dass hierzu das Überspannungsschutzelement von dem Geräteunterteil abgenommen werden muss, so dass ein Test während des Betriebs nicht möglich ist.

Aus der US 6,600,425 B1 ist ein eingangs beschriebenes Überspannungsschutzelement mit einem gasgefüllten Überspannungsableiter bekannt, bei dem ein lichtempfindlicher Sensor derart optisch mit dem Überspannungsableiter verbunden und zusammen mit diesem in einem lichtundurchlässigem Gehäuse angeordnet ist, dass der Sensor einen anstehenden Lichtbogen erfasst. Beim Anstehen eines Lichtbogens im dem gasgefüllten Überspannungsableiter erzeugt daher der Sensor ein Signal, dass von einer Auswerteeinheit auswertet wird, die mit dem Sensor verbunden ist. Da die Helligkeit und die Dauer des Lichtbogens von der anstehenden Überspannung abhängt, soll anhand des Signals des Sensors eine Aussage über die Größe und Dauer der anstehenden Überspannung gewonnen werden. Eine genaue Aussage über die Größe und Dauer der anstehenden Überspannung ist jedoch nur mit relativ großem Aufwand und unter Berücksichtigung von mehreren Referenzmessungen möglich.

Der vorliegenden Erfindung liegt die Aufgabe zugrunde, ein eingangs beschriebenes Überspannungsschutzelement zur Verfügung zu stellen, das eine einfache Kontrolle der Funktionstüchtigkeit und des Zustandes des Überspannungsschutzelements während des Betriebs ermöglicht.

Diese Aufgabe ist bei dem eingangs beschriebenen Überspannungsschutzelement dadurch gelöst, dass als Überwachungsbauelement ein Optokoppler verwendet wird, der parallel zu einem in Reihe mit dem überspannungsbegrenzenden Bauelement angeordneten Widerstand geschaltet ist und den durch den Widerstand fließenden Strom erfasst. Die Verwendung eines Optokopplers als Überwachungsbauelement eignet sich sowohl bei überspannungsbegrenzenden Bauelementen, die dem Grobschutz dienen, beispielsweise bei einem gasgefüllten Überspannungsableiter oder einer Funkenstrecke, als auch bei überspannungsbegrenzenden Bauelementen, die dem Feinschutz dienen, beispielsweise einer Suppressor-Diode.

Dadurch, dass dem überspannungsbegrenzenden Bauelement ein Überwachungsbauelement zugeordnet ist, das einen über das überspannungsbegrenzende Bauelement fließenden Strom, insbesondere einen Ableitstrom, erfasst, ist eine Erfassung der Beanspruchung des überspannungsbegrenzenden Bauelements im Betrieb möglich. Durch die Verwendung einer entsprechenden Auswerteeinheit, die das von dem Überwachungsbauelement aufgrund eines über das überspannungsbegrenzende Bauelement fließenden Stromes gelieferte Signal auswertet, ist eine Aussage über die Belastung eines überspannungsbegrenzenden Bauelements möglich, bevor es zu einem Defekt des Bauelements kommt. Somit können vorgeschädigte Überspannungsschutzelemente rechtzeitig erkannt und ausgetauscht werden. Die Auswerteeinheit ist dabei vorzugsweise so ausgebildet, dass sie neben der Häufigkeit und der Höhe der Belastung eines überspannungsbegrenzenden Bauelements auch die Dauer der Belastung, d. h. die Dauer des Ableitstroms, auswertet.

Da bei Anliegen einer Überspannung ein sehr hoher Strom über das überspannungsbegrenzende Bauelement, insbesondere einen gasgefüllten Überspannungsableiter oder eine Funkenstrecke fließen kann, schützt die galvanische Trennung der Auswerteeinheit von dem Ableitstrompfad die Auswerteeinheit vor einer Beschädigung und ermöglicht eine Reduzierung der Amplitude des von der Auswerteeinheit auszuwertenden Signals.

Wird der Optokoppler zur Funktionsüberwachung eines gasgefüllten Überspannungsableiters oder einer Funkenstrecke verwendet, so hat der dem überspannungsbegrenzenden Bauelement in Reihe geschaltete Widerstand, der dem der Optokoppler parallel geschaltet ist, die Funktion eines Shunts. Der Widerstand weist somit einen relativ geringen Wert auf, so dass er die Funktion des überspannungsbegrenzenden Bauelements nicht beeinflusst.

Gemäß einer bevorzugten Ausgestaltung des erfindungsgemäßen Überspannungsschutzelements, bei der das Überspannungsschutzelement sowohl einen gasgefüllten Überspannungsableiter oder eine Funkenstrecke als auch eine Suppressor-Diode als überspannungsbegrenzende Bauelemente aufweist und bei der zwischen dem gasgefüllten Überspannungsableiter oder der Funkenstrecke und der Suppressor-Diode ein Entkopplungswiderstand angeordnet ist, ist der Optokoppler parallel zum Entkopplungswiderstand geschaltet. Ein Überspannungsschutzelement mit einem gasgefüllten Überspannungsableiter, einer Suppressor-Diode und einem Entkopplungswiderstand ist aus dem Stand der Technik, insbesondere im MSR-Bereich bekannt. Zur Zustandsüberwachung der Suppressor-Diode ist der Optokoppler als Überwachungsbauelement einfach dem ohnehin vorhandenen Entkopplungswiderstand parallel geschaltet. Bei hochohmigem Abschluss des Überspannungsschutzelements entspricht der Strom durch den Entkopplungswiderstand dem Strom durch die Suppressor-Diode, so dass durch Erfassung des Stromes durch den Entkopplungswiderstand mit Hilfe des Optokopplers die Belastung der Suppressor-Diode ermittelt und daraus eine Aussage über deren voraussichtliche Lebensdauer getroffen werden kann. Darüber hinaus kann eine Überschreitung des durch den Entkopplungswiderstand fließenden zulässigen Laststromes erkannt werden, so dass eine Beschädigung des Widerstands angezeigt bzw. verhindert werden kann.

Unabhängig davon, ob mittels des Optokopplers ein gasgefüllter Überspannungsableiter oder eine Suppressor-Diode auf ihre Funktion überwacht wird, wird durch den Optokoppler die galvanische Trennung zur Auswerteeinheit hergestellt und ein gemessener Strom durch den Ableitstrompfad in einen kleineren, leicht messbar und auswertbaren Strom übersetzt. Dabei ist es selbstverständlich auch möglich, dass bei einem Überspannungselement mit einem gasgefüllten Überspannungsableiter oder einer Funkenstrecke und mit einer Suppressor-Diode die Funktionstüchtigkeit des gasgefüllten Überspannungsableiters von einem Optokoppler und die Funktionstüchtigkeit der Suppressor-Diode von einem weiteren Optokoppler überwacht wird.

Gemäß einer Ausgestaltung des erfindungsgemäßen Überspannungsschutzelements ist mindestens eine optische Zustandsanzeige für das mindestens eine überspannungsbegrenzende Bauelement im Gehäuse angeordnet, so dass der Zustand des Überspannungsschutzelements bzw. eines überspannungsbegrenzenden Bauelements direkt vor Ort angezeigt werden kann. Die Zustandsanzeige kann dabei vorzugsweise drei Bereiche mit unterschiedlichen Markierungen, insbesondere drei Bereiche mit unterschiedlichen Farben, beispielsweise grün, gelb und rot aufweisen, so dass nicht nur der Defekt eines überspannungsbegrenzenden Bauelements sondern bereits eine Vorschädigung angezeigt werden kann. Weist das Überspannungsschutzelement mehrere überspannungsbegrenzende Bauelemente auf, so ist für jedes Bauelement dessen Zustand separat anzeigbar.

Gemäß einer weiteren vorteilhaften Ausgestaltung der Erfindung weist das Überspannungsschutzelement neben der optischen Zustandsanzeige auch einen Fernmeldekontakt zur Fernmeldung des Zustands des Überspannungsschutzelements bzw. der Zustände der einzelnen überspannungsbegrenzenden Bauelemente auf.

Im einzelnen gibt es nun eine Vielzahl von Möglichkeiten, das erfindungsgemäße Überspannungsschutzelement auszugestalten und weiterzubilden. Dazu wird verwiesen sowohl auf die dem Patentanspruch 1 nachgeordneten Patentansprüche als auch auf die nachfolgende Beschreibung bevorzugter Ausführungsbeispiele in Verbindung mit der Zeichnung. In der Zeichnung zeigen
- Fig. 1: eine vereinfachtes Schaltbild einer ersten Ausführungsvariante eines Überspannungsschutzelements,
- Fig. 2: eine vereinfachtes Schaltbild einer zweiten Ausführungsvariante eines Überspannungsschutzelements,
- Fig. 3: eine vereinfachtes Schaltbild einer ersten Ausführungsvariante eines erfindungsgemäßen Überspannungsschutzelements, und
- Fig. 4: eine vereinfachtes Schaltbild einer zweiten Ausführungsvariante eines erfindungsgemäßen Überspannungsschutzelements.

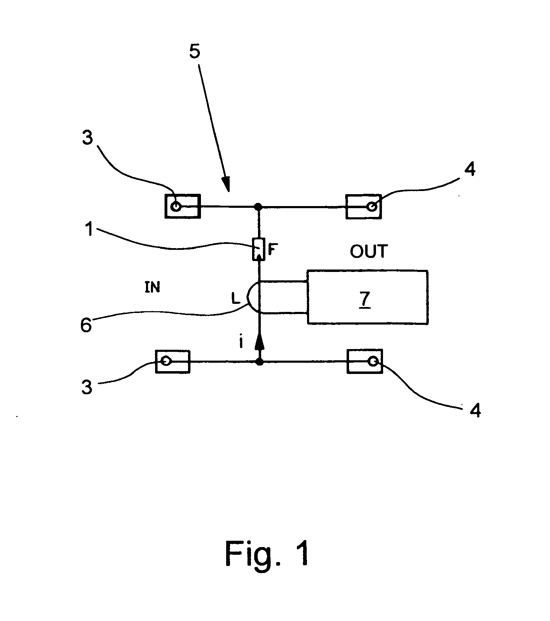

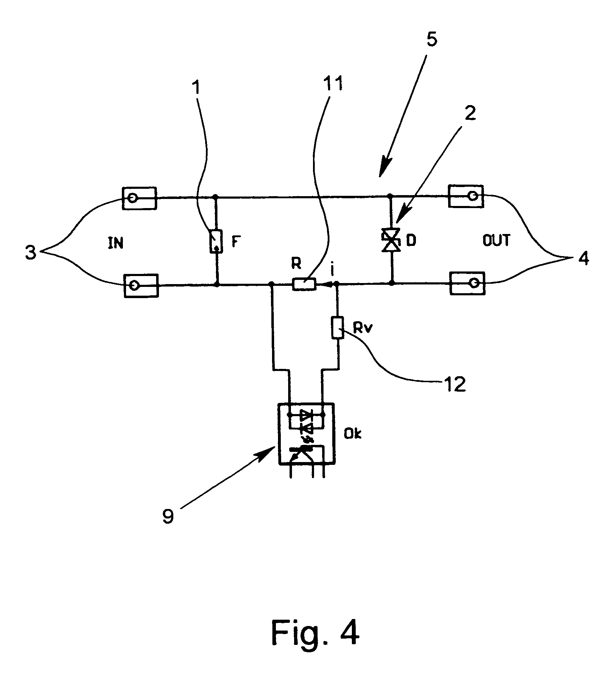

Die Figuren zeigen jeweils ein vereinfachtes Schaltbild verschiedener Ausführungsvarianten von Überspannungsschutzelementen, wobei in den Schaltbildern jeweils nur das bzw. die überspannungsbegrenzenden Bauelemente sowie ein Überwachungsbauelement dargestellt sind. Die Fig. 1 bis 3 zeigen dabei jeweils ein Ausführungsbeispiel, bei dem als überspannungsbegrenzendes Bauelement ein gasgefüllter Überspannungsableiter 1 vorgesehen ist. Bei den Ausführungsbeispiel gemäß der Fig. 4 ist zusätzlich zu einem gasgefüllten Überspannungsableiter 1 als Grobschutz noch eine Suppressor-Diode 2 als Feinschutz vorgesehen. Die in den Figuren dargestellten vereinfachten Schaltungen weisen jeweils zwei Eingangsanschlüsse 3 zum Anschluss zweier Leitungen und zwei Ausgangsanschlüsse 4 zum Anschluss des zu schützenden Geräts, beispielsweise eines Sensors oder einer Steuerung, auf. Weitere Anschlüsse, insbesondere eine Masseanschluss können vorgesehen sein, auch wenn sie in den Figuren nicht dargestellt sind.

Den Ausführungsbeispielen ist gemeinsam, dass dem gasgefüllten Überspannungsableiter 1 (Fig. 1 bis 3) bzw. der Suppressor-Diode 2 (Fig. 4) ein Überwachungsbauelement zugeordnet ist, das einen über den gasgefüllten Überspannungsableiter 1 bzw. die Suppressor-Diode 2 fließenden Strom i erfasst. Das in Abhängigkeit vom Strom i von dem Überwachungsbauelement erzeugte Signal wird in einer - hier nicht dargestellten - Auswerteeinheit ausgewertet, wobei die Auswerteeinheit bei den Ausführungsbeispielen gemäß den Fig. 1 bis 4 galvanisch von dem Ableitstrompfad 5, über den der Strom i durch den gasgefüllten Überspannungsableiter 1 bzw. die Suppressor-Diode 2 fließt, getrennt ist.

Bei dem Ausführungsbeispiel gemäß Fig. 1 ist das Überwachungsbauelement eine Spule 6, die induktiv mit dem Ableitstrompfad 5 gekoppelt ist, so dass von der Spule 6 ein Strom i durch den gasgefüllten Überspannungsableiter 1 erfasst wird. Die Spule 6 ist mit einem Integrator 7 verbunden, wodurch die Energie des Stromimpulses durch den gasgefüllten Überspannungsableiter 1 ermittelt werden kann. Aus der Impulsenergie lässt sich die Belastung des gasgefüllten Überspannungsableiters 1 durch den Ableitstrom i bestimmen.

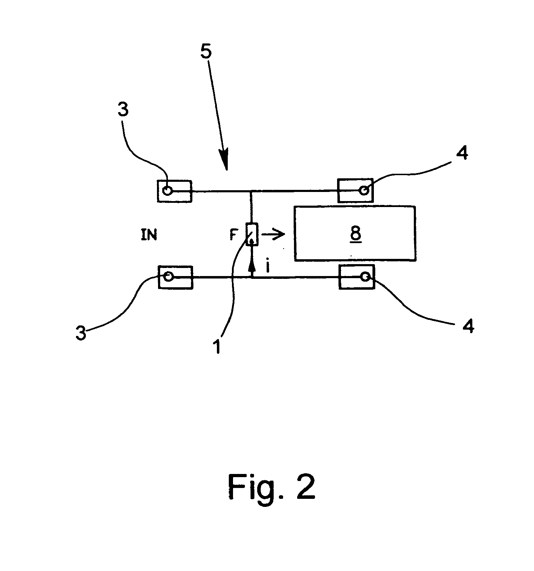

Bei dem Ausführungsbeispiel gemäß Fig. 2 wird ein Fotoelement 8 als Überwachungsbauelement verwendet, wobei das Fotoelement 8 derart benachbart zum gasgefüllten Überspannungsableiter 1 angeordnet ist, dass von dem Fotoelement 8 ein beim Anliegen einer Überspannung im gasgefüllten Überspannungsableiter 1 anstehender Lichtbogen erfasst wird. Durch eine geeignete Signalverarbeitung ist es möglich, anhand des von dem Fotoelement 8 detektierten Lichtbogens die Intensität und die Dauer des Ableitvorganges und damit ein Maß für die Belastung des gasgefüllter Überspannungsableiters 1 zu ermitteln.

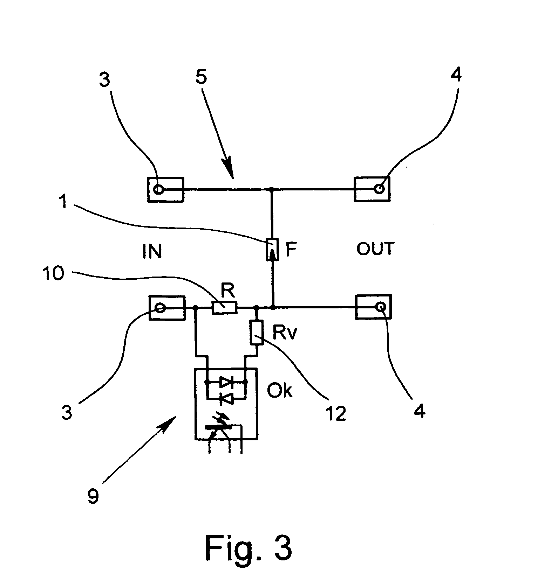

Bei den beiden erfindungsgemäßen Ausführungsbeispielen gemäß den Fig. 3 und 4 wird als Überwachungsbauelement ein Optokoppler 9 verwendet, wobei der Optokoppler 9 bei der Variante gemäß Fig. 3 parallel zu einem in Reihe mit dem gasgefüllten Überspannungsableiter 1 liegenden Widerstand 10 angeordnet ist. Während bei dem Ausführungsbeispiel gemäß Fig. 3 mit dem Optokoppler 9 die Funktionsfähigkeit des gasgefüllten Überspannungsableiters 1 überwacht wird, dient der Optokoppler 9 bei dem Ausführungsbeispiel gemäß Fig. 4 der Überwachung der Suppressor-Diode 2. Hierzu ist der Optokoppler 9 parallel zu einem Entkopplungswiderstand 11 geschaltet, der zwischen dem gasgefüllten Überspannungsableiter 1 und der Suppressor-Diode 2 angeordnet ist.

Im Strompfad des Optokopplers 9 ist noch ein weiterer Widerstand 12 angeordnet, dessen Widerstandswert wesentlich größer als der Widerstandswert des Widerstands 10 bzw. des Entkopplungswiderstands 11 ist. Bei dem Ausführungsbeispiel gemäß Fig. 4 liegt der Entkopplungswiderstand 11 im Bereich einiger Ohm während der Widerstand 12 beispielsweise im Bereich einiger hundert Ohm liegt.

Der Optokoppler 9 dient dabei dazu, den durch den Widerstand 10 bzw. den Entkopplungswiderstand 11 fließenden Strom zu erfassen, wobei mit dem Optokoppler 9 bzw. einer nachgeschalteten Auswerteeinheit sowohl die Amplitude als auch die Dauer eines durch den Widerstand 10 bzw. den Entkopplungswiderstand 11 und damit bei hochohmigem Abschluss auch durch den gasgefüllten Überspannungsableiter 1 bzw. die Suppressor-Diode 2 flieβenden Stromimpulses i erfasst wird.

Auch wenn in den Fig. 1 bis 4 jeweils nur ein Überwachungsbauelement zur Kontrolle der Funktionstüchtigkeit eines überspannungsbegrenzenden Bauelements vorgesehen ist, so ist für den Fachmann ersichtlich, das zur Überwachung mehrerer überspannungsbegrenzender Bauelemente auch mehrere gleiche oder unterschiedliche Überwachungsbauelemente vorgesehen sein können.

So kann beispielsweise bei einem Überspannungsschutzelement gemäß Fig. 4, welches sowohl einen gasgefüllten Überspannungsableiter 1 als auch eine Suppressor-Diode 2 aufweist, die Funktionstüchtigkeit des gasgefüllten Überspannungsableiters 1 mittels eines ersten Optokopplers 9 und die Funktionstüchtigkeit der Suppressor-Diode 2 mittels eines zweiten Optokopplers 9 überwacht werden. Ebenso ist es beispielsweise auch möglich, bei dem in Fig. 4 dargestellten Überspannungsschutzelement die Funktionstüchtigkeit des gasgefüllten Überspannungsableiters 1 mit einer Spule 6 gemäß Fig. 1 oder mit einem Fotoelement 8 gemäß Fig. 2 zu überwachen.

## Patentansprüche

1. Überspannungsschutzelement mit einem Gehäuse und mit mindestens einem in dem Gehäuse angeordneten überspannungsbegrenzenden Bauelement, insbesondere einem gasgefüllten Überspannungsableiter (1), einer Funkenstrecke, einer Suppressor-Diode (2) oder einem Varistor,
wobei dem überspannungsbegrenzenden Bauelement (1, 2) ein Überwachungsbauelement (9, 10, 11) zugeordnet ist welches den über das Überspannungsbegrenzende Bauelement fliessenden Ableitstrom erfasst und wobei eine das Signal des Überwachungsbauelements auswertende Auswerteeinheit vorgesehen ist, die galvanisch von dem Ableitstrompfad (5), über den der von dem Überwachungsbauelement erfasste Ableitstrom (i) fließt, getrennt ist,
**dadurch gekennzeichnet,**
**dass** das Überwachungsbauelement ein Optokoppler (9) ist, der parallel zu einem in Reihe mit dem überspannungsbegrenzenden Bauelement angeordneten Widerstand (10, 11) geschaltet ist und den durch den Widerstand (10, 11) fließenden Ableitstrom erfasst.

2. Überspannungsschutzelement nach Anspruch 1, **dadurch gekennzeichnet, dass** dem Optokoppler (8) ein Widerstand (12) in Reihe geschaltet ist, dessen Widerstandswert größer, vorzugsweise wesentlich größer, als der Widerstandswert des in Reihe mit dem überspannungsbegrenzenden Bauelement angeordneten Widerstands (10, 11) ist.

3. Überspannungsschutzelement nach Anspruch 1 oder 2, mit einem gasgefüllten Überspannungsableiter (1) oder einer Funkenstrecke und mit einer Suppressor-Diode (2) als überspannungsbegrenzende Bauelemente, **dadurch gekennzeichnet, dass** zwischen dem gasgefüllten Überspannungsableiter (1) oder der Funkenstrecke und der Suppressor-Diode (2) ein Entkopplungswiderstand (11) angeordnet ist, wobei der Optokoppler (9) parallel zu dem Entkopplungswiderstand (11) angeordnet ist.

4. Überspannungsschutzelement nach einem der Ansprüche 1 bis 3, **dadurch gekennzeichnet, dass** eine optische Zustandsanzeige für das mindestens eine überspannungsbegrenzende Bauelement im Gehäuse angeordnet ist.

5. Überspannungsschutzelement nach einem der Ansprüche 1 bis 4, **dadurch gekennzeichnet, dass** ein Fernmeldekontakt zur Fernmeldung des Zustands des mindestens einen überspannungsbegrenzenden Bauelements im Gehäuse angeordnet ist.

## Claims

1. Overvoltage protector with a housing and with at least one overvoltage limiter located in the housing, in particular a gas-filled surge arrester (1), a spark gap, a suppressor diode (2) or a varistor,
wherein a monitoring component (9, 10, 11) is assigned to the overvoltage limiter (1, 2), which detects a current flowing via the overvoltage limiter, and wherein an evaluation unit is provided for evaluating a signal of the monitoring component, the evaluation unit being electrically isolated from a discharge current path (5) via which the current (i) detected by the monitoring component flows,
**characterized in**
**that**, the monitoring component is an optical coupler (9), which is connected in parallel to a resistor (10, 11) that is located in series with the overvoltage limiter and which detects current flowing through the resistor (10,11).

2. Overvoltage protector according to claim 1, **characterized in that** the a resistor (12) is connected to the optical coupler (9) in series, whose resistance value is greater, preferably much greater, than the resistance value of the resistor (10, 11) which is located in series with the overvoltage limiter.

3. Overvoltage protector according to claim 1 or 2, having a gas-filled surge arrester (1) or a spark gap and having a suppressor diode (2) as overvoltage limiter, **characterized in that** a decoupling resistor is located gas-filled surge arrester (1) or spark gap and the suppressor diode (2), wherein the optical coupler (9) is arranged parallel to the decoupling resistor.

4. Overvoltage protector according to any one of claims 1 to 3, **characterized in that** an optical state display for at least one overvoltage limiter is located in the housing.

5. Overvoltage protector according to any one of claims 1 to 4, **characterized in that** a telecommunications contact for remote indication of the state of at least one overvoltage limiter is located in the housing.

## Revendications

1. Elément de protection contre les surtensions, présentant un boîtier et au moins un composant limitant les surtensions disposé dans le boîtier, en particulier un évacuateur (1) de surtensions rempli de gaz, un parcours d'étincelles, une diode (2) de suppression ou un varistor,
un composant de surveillance (9, 10, 11) qui saisit le courant d'évacuation qui s'écoule dans le composant limitant les surtensions étant associé au composant limitant les surtensions (1, 2), et
une unité d'évaluation qui évalue le signal du composant de surveillance étant prévue et étant séparée galvaniquement du parcours (5) de courant d'évacuation dans lequel s'écoule le courant d'évacuation (i) saisi par le composant de surveillance,
**caractérisé en ce que**
le composant de surveillance est un optocoupleur (9) raccordé en parallèle à une résistance (10, 11) raccordée en série sur le composant limitant les surtensions et qui saisit le courant d'évacuation qui s'écoule dans la résistance (10, 11).

2. Elément de protection contre les surtensions selon la revendication 1, **caractérisé en ce qu'**une résistance (12) dont la valeur est supérieure et de préférence considérablement supérieure à la valeur de la résistance (10, 11) raccordée en série sur le composant limitant les surtensions est raccordée en série sur l'optocoupleur (8).

3. Elément de protection contre les surtensions selon les revendications 1 ou 2, présentant un évacuateur (1) de surtensions rempli de gaz ou un parcours d'étincelles et une diode (2) de suppression comme composants limitant les surtensions, **caractérisé en ce qu'**une résistance de découplage (11) est disposée entre l'évacuateur (1) de surtensions rempli de gaz ou le parcours d'étincelles et la diode (2) de suppression, l'optocoupleur (9) étant disposé en parallèle par rapport à la résistance de découplage (11).

4. Elément de protection contre les surtensions selon l'une des revendications 1 à 3, **caractérisé en ce qu'**un affichage visuel de l'état du ou des composants limitant les surtensions est disposé dans le boîtier.

5. Elément de protection contre les surtensions selon l'une des revendications 1 à 4, **caractérisé en ce qu'**un contact de transmission à distance permettant la transmission à distance de l'état du ou des composants limitant les surtensions est disposé dans le boîtier.
